# EUROPEAN PATENT APPLICATION

(11) **EP 1 710 972 A1**
(43) Date of publication of application: **11.10.2006**
(21) Application number: 05252158.0
(22) Date of filing: 06.04.2005
(51) Int. Cl.: H04L 29/06

(54) **A system for processing context data**

(71) Applicant: BRITISH TELECOMMUNICATIONS public limited company, London EC1A 7AJ (GB)
(72) Inventor: Lee, Habin. Dr., Ipswich Suffolk IP4 3LJ (GB)
(74) Representative: Musker, David Charles

(57) **Abstract**

A system (300) for processing context data comprising means for receiving context data (304,308,402,404,406) from a plurality of sources (302); means for producing context information (310,312,314,316) from the received context data according to a predetermined rule-set including a plurality of rules; and means for communicating (308,316,400,404,406) the context information to at least one application, wherein the system (300) includes means for permitting at least one protocol-source (302,304,404) to specify instructions and/or rules related to a communication protocol for communication between the protocol-source and the system, thereby updating the means for receiving (304,308,402,404,406) and/or the means for communicating (308,316,400,404,406). The system (300) further includes means for permitting at least one rule-source (302,304,402) to specify at least one rule thereby updating the rule-set, wherein the rule-source (302,304,402) specifies rules for filtering and/or formatting the context data and rules for producing context information from context data. The system (300) is used in a network (Fig. 4) for processing context data. One or more systems (300) are implemented on a wireless apparatus (102).

## Description

The invention relates to a system for processing context data, which is related to the environment, to notify applications when a particular condition is met. The system may be implemented in a portable wireless apparatus and included in a network for processing context data for use with a work management system.

### Background

Knowing a computing device's context can be useful in providing services based on time and location. In a simple example, a computing device may receive location data from a Global Positioning Satellite (GPS) receiver. This data is usually referred to as context data. An application may use this context data to determine the location of a user and provide a useful service based on that location.

To provide these useful services, the hardware (e.g. GPS receiver) or software providing context data is typically called a context source, hereinafter referred to as a source, which measures an aspect of its environment (its context) to produce context data. Many applications have been written that use context data as in the Cyberguide and GUIDE projects [Gregory D. Abowd et. al., "Cyberguide: A Mobile Context-Aware Tour Guide ", Wireless Networks, 3(5):421-433, October 1997] [Nigel Davies et. al., "Caches in the Air: Disseminating Tourist Information in the GUIDE System", in WMCSA, New Orleans, Louisiana, IEEE Computer Society Press].

These projects have produced applications, which have context-aware features, that reside in portable units providing location or time based services. For example, the units can act as tour guides for interactively guiding tourists around tourist sites or cities. Although they provide interactive services, their context aware features are not re-configurable, without a large investment in re-design, if additional new sources providing new context data are required.

On the other hand, systems for processing context data have been designed that produce context information, based on context data, according to predefined business rule-sets whereby the context information can be distributed to applications requesting it. A simple example of context information based on context data such as the location and time data obtained from a GPS receiver could be information like *"the technician has stayed at the same location for 30 minutes"* or *"the user is now late*", which is sent to the application in an appropriate format. An application requesting and receiving such information may then use it accordingly to provide a location based service, for example, automatically optimising/updating a field engineer's schedule, controlling the deployment of an organisation's workforce, or showing a user nearby shops that are open or likely to be of interest.

These systems have prompted software developers to implement applications with context aware features by using predefined software toolkits for providing context data support, for example the software library called the *"Context Toolkit*" [Anind K Dey, "Providing Architectural Support for Building Context-Aware Applications", PhD Thesis, November 2000, Georgia Institute of Technology].

However, it has been frequently reported that the systems and applications developed to work with these software toolkits cannot fully satisfy the aims of:- being hardware, operating system, and programming language independent; or adequately providing for improved capabilities of maintenance and evolution; and fully sharing additional sources, processing power, context data and services [Jason I Hong and James A Landay, "An Infrastructure Approach to Context-Aware Computing", Human Computer Interaction, 16 (2,3 & 4), 287-303, 2001].

US 2004/0111397 A1 and EP 1217857 A2 disclose systems for processing context data that receive context data from numerous sources and send context information to numerous applications.

The system disclosed in US 2004/0111397 A1 focuses on fusing context data for use by applications. Context data from similar sources are grouped together and then aggregated. For each group, a single context value and single quality value is computed to reduce the likelihood of ambiguous context information.

In EP 1217857 A2, a system for processing context data is applied to control various applications within a vehicle depending on the user's and/or vehicle's context. Once the context is determined, a set of policies is executed and then enforced. This technique has been extended in US 2002/0124067 A1 for use in portable devices, such as laptops, where the enterprise policies are executed on a laptop depending on a user's location. The policies may control access to electronic files when a user moves location, for example.

However, although these systems communicate with sources and applications having context aware features, the communication is only provided by hard-coded application programming interfaces (API). This severely limits these systems to only those sources and applications that have been written specifically to communicate with them. These systems also use their own procedures for the flow of context data and context information. Thus the APIs, and hence both disclosed systems, need to be redesigned should additional "non-conforming" or proprietary sources, or "non-conforming" or proprietary applications supporting context aware features be required.

If additional rules for producing additional context information from context data are to be added to the abovementioned systems, the systems have to be redeveloped, for example, by rewriting and recompiling the software.

In addition, the aforementioned systems were attempts at standardising sources and the communication functions with applications that provide context aware features. However, for each organisation that requires applications that provide context aware features, context data related to various sources may be collected differently, for different reasons, in different formats, from different types of computing devices, using different communication protocols. As context aware computing matures, developers and organisations requiring context aware features are faced with a costly hurdle in updating their systems to overcome the prevalent use of, or need for, additional, non-standardised, or legacy sources and applications.

Aspects of the invention are set out in the accompanying claims.

In a further aspect of the invention, a system for processing context data is provided which includes means for receiving context data from a plurality of sources; means for producing context information from the received context data according to a predetermined rule-set including a plurality of rules; and means for communicating the context information to at least one application, wherein the system further includes means for permitting at least one protocol-source to specify a new communication protocol for future communication between the system and the protocol-source thereby updating the means for receiving and communicating. The new communication protocol is dynamically provided during runtime of the system.

Entities such as sources (context data sources), means for collecting context data, and applications or components thereof can act as protocol-sources by providing the functionalities to specify and communicate new communication protocols. Examples of applications facilitating the communication of new communication protocols are directory service applications or applications with context aware features. The ability of protocol-sources to communicate new communication protocol information to the system allows additional applications or sources to be incorporated into the system to update the means for receiving and communicating context data and context information without the need for redevelopment. This provides the added functionality of the system handling additional, non-standard or legacy sources and applications. The new communication protocol information, which may further include new code that implements the new communication protocol, can be loaded into system memory dynamically during system runtime allowing the system to remain operational.

The system may further include a protocol registry for storing the new communication protocols. In addition, the new entities such as sources, means for collecting context data or applications, (acting as protocol-sources) transmit new code that performs an implementation of the communication protocol, which can be stored in the protocol registry. This dynamically provides the system with the appropriate communication protocol and code implementing the communication protocol that specifies how the system should communicate with each entity. The necessary programs or links thereto, for implementing that entities communication protocol are further provided. This allows protocol implementations such as executable files, for example the *inetd* program, standard communication protocols such as the transmission control protocol/internet protocol (TCP/IP), or custom communication protocols and protocol implementations, to be incorporated into the system dynamically and during runtime.

The code that performs the implementation of the communication protocol may be given in a platform independent format, such as byte-code format or interpreter based formats like XML. This allows the system to be hardware, operating system, and programming language independent and provides the capability of future maintenance and evolution without costly redevelopment of the system.

In addition, the protocol registry allows the communication protocols communicated by the entities (acting as protocol-sources) to be stored in a secure place such as a central server. This provides added security ensuring the system for processing context data has access to legitimate sources and applications.

In another aspect of the invention, a system for processing context data is provided which includes means for receiving context data from a plurality of sources; means for producing context information from the received context data according to a predetermined rule-set including a plurality of rules; and means for communicating the context information to at least one application, wherein the system further includes means for permitting at least one rule-source to specify at least one rule, that can be dynamically provided during run-time, thereby updating the rule-set, wherein the rule-source specifies rules and/or rule related data for filtering and/or formatting the context data.

The rule-sources can be, among other things, context data sources, applications with context aware features, or other applications acting as facilitators for the provision of rules and/or rule related data. As the rule-source specifies rules and/or rule related data for filtering and/or formatting the context data, this allows the system to handle rule-sources that provide uniquely formatted context data. The rule-source specifies additional rules and/or related data to add to the rule-set, the rules of additional or updated applications and/or sources are then incorporated into the system without the need for recompiling or redevelopment of the system. That is, these rules and/or related data can be loaded into system memory dynamically while the system is in operation, or in system runtime.

Preferably, the rules determined by the rule-source further include rules for producing context information from context data. This allows applications with context aware features to provide additional rules for processing context data into context information. The rules specified by the rule-source may further relate to either the receipt by the system of context data or to the processing of context data to produce context information.

Where the rule-source determines a rule and/or related data for receiving context data, additional sources that provide context data can be handled by the system. This allows the system to be updated to deal with the format of the context data of additional sources dynamically by specifying, for example, the manner in which the context data is to be filtered and/or formatted to enable processing the context data.

The system may further include at least one registry for storing rules specified by the rule-source. This may include a first registry for storing rules for filtering and/or formatting context data and a second registry for storing rules for producing context information. The first registry also stores rules and related data for formatting/filtering context data that are further provided by sources (context sources) and/or applications facilitating a directory service. The second registry also stores rules and related data for operating on formatted context data further provided by applications with context aware features. In addition, applications with context aware features may provide further rules and related data for handling rules and/or data related to requests of context information that are stored in the second registry.

By providing registries, the additional rules and/or related data, which are required when additional sources and applications are added or removed from the system, will update the system without the need for redeveloping or redeploying the system. A registry system can provide further mechanisms for the validation of legitimate sources providing context data ensuring the reliability and security of the system.

The system for processing context data may include means for notifying the application when a predetermined requirement or one or more rule conditions are met. This allows the system to be dynamically configured to notify an application when one or more conditions are satisfied when context data is processed. The system may further include an interest registry for storing the rules that determine the predetermined requirements of the applications.

The predetermined requirement can be at least partly determined by the rules and/or rule related data specified by the rule-source, where these rules can further be additional rules related to requests for context information, or data related to requests for context information. Applications can specify rules and/or data relating to requests for context information during system runtime.

Where the rule-source specifies a rule for the processing of context data to produce the context information, the system can incorporate the additional rules, which implement the notification of an application's request for context information. This can be done dynamically and without the need to redevelop the engine.

In further aspects of the invention, the system for processing context data may include means for collecting context data. Preferably, the system also includes means for translating the context data provided by the sources and for providing the context data to the system. The translating means may be a wrapper program. This allows sources not specifically designed to operate with the system to be dynamically added to the system without the need to rewrite the system.

The collecting means and/or translating means may be incorporated into a hardware or software sensor, which can also be a component of a source or application. This allows for the provision of improved maintenance and evolution capabilities and the ability to share sources, sensors and context data.

A network for processing context data which includes at least one system for processing context data with any combination of the features as described above, a plurality of data sources for supplying context data to at least one of the systems for processing context data and a plurality of applications for receiving context information from at least one of the systems in the network.

The network including at least one wireless device with at least one of the systems for processing context data installed. The network may further include at least one data source (e.g. context data sources) and/or at least one of the applications being implemented on the wireless device. Alternatively, the data source may be implemented on an additional external device. In conjunction with applications like work management systems, this network can provide for the efficient deployment of an organisation's workforce.

Preferred features of the present invention will now be described, purely by way of example, with reference to the accompanying drawings, in which: -
Figure 1 illustrates a symbolic representation of a system for processing context data.
Figure 2 illustrates the communication manager of the system of Figure 1.
Figure 3 illustrates the interest registry of the system of Figure 1.
Figure 4 illustrates a preferred embodiment of a network for processing context data using the system of Figure 1 for use with a work management system.
Figure 5 illustrates a preferred embodiment of a wireless apparatus for use in the network of Figure 4.

### Specific Description of the Preferred Embodiments

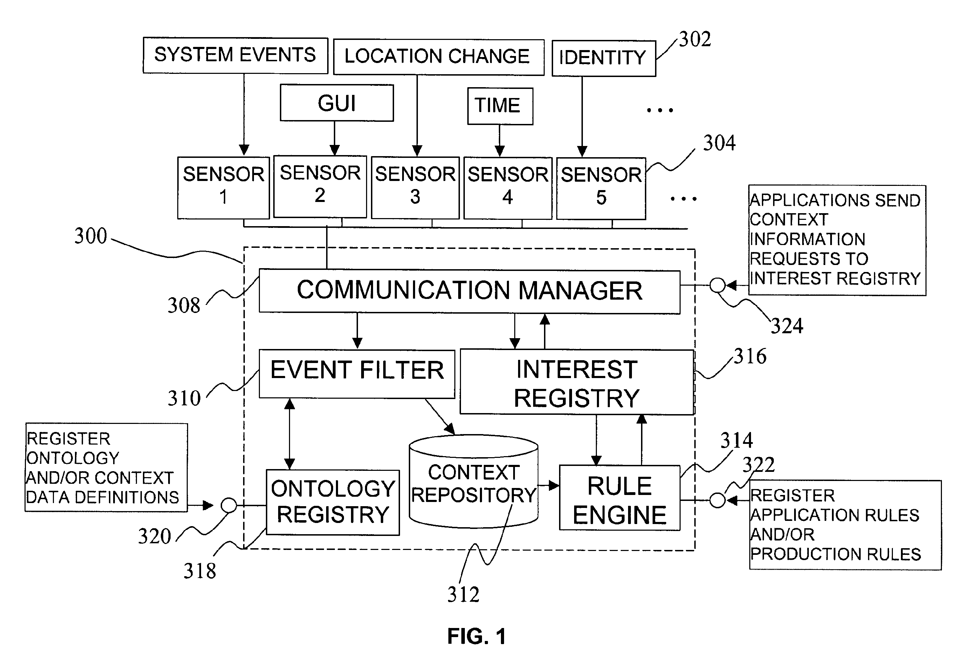

A symbolic representation of a system **300** for processing context data is shown in Figure 1. A brief overview of the system **300** is now given followed by a detailed description of its components. The system **300** communicates with a plurality of context data sources **302,** hereinafter referred to as sources **302,** which provide context data to the context repository **312** by means of the communication manager **308,** event filter **310** and ontology registry **318.** The system **300** includes instructions and/or rules and related data relating to communication protocols for communication between the sources **302** and the communication manager **308** either by means of sensors **304,** applications or otherwise.

The system **300** notifies an application (not shown) when a particular requirement is met. The particular requirement is calculated by the system **300** based on a rule-set. The rule-set includes rules and related data for formatting and/or filtering the context data performed in the event filter **310,** which refers to the ontology registry **318.** The rule-set also includes rules and related data for requests of context information given by applications (the particular requirements of the applications) which communicate with the system **300** via the communication manager **308,** interest registry interface **324,** rule registry interface **322** and interest registry **316.** The rule-set also includes rules and related data for calculating context information from the context data in the rule engine **314.**

The primary functionality of the system **300** is:- receiving context data collected by sensors **304** that act as interfaces between the sources **302** and the communication manager **308;** task progress reasoning or context data processing being performed by the interaction of the system's **300** event filter **310** and rule engine **314;** and the interfacing with external systems or applications (not shown) being performed by the interaction of the interface **324,** communication manager **308,** interest registry **316** and rule engine **314.**

Initially, context data and applications having context aware features are first defined, during the design stage, by an organisation as a system specification. The required sources **302** and sensors **304** can also be defined within the system specification. As will be described, the system **300** for processing context data can be dynamically updated when additional or upgraded sources **302,** sensors **304,** and applications are required.

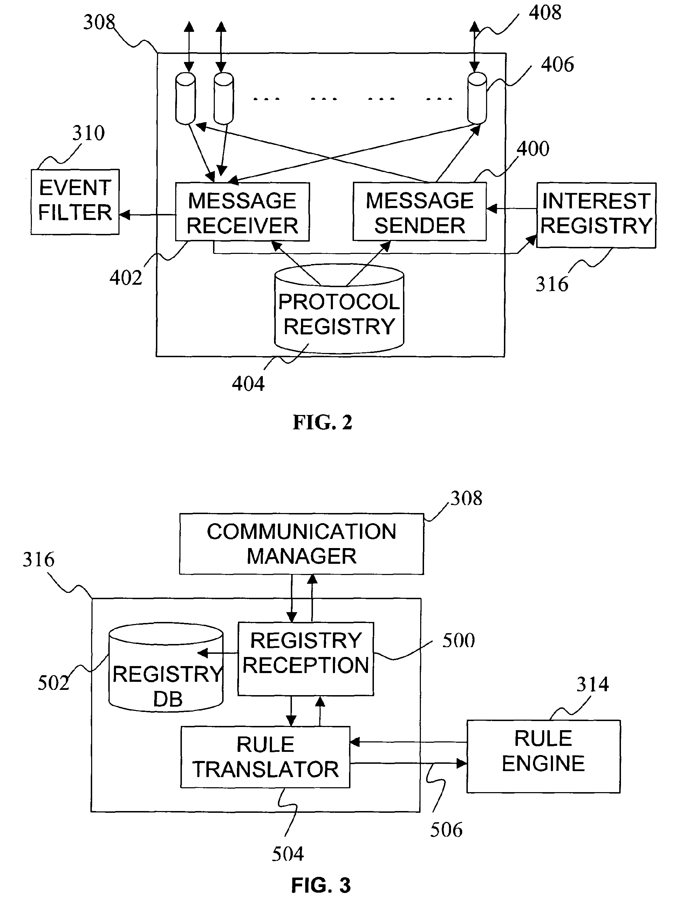

Entities such as sources **302,** sensors **304** and applications need to have the functionalities of specifying new communication protocols or rules, which is they act as protocol-sources and/or rule-sources. When the entities have the functionalities of acting as protocol-sources, they will typically register new communication protocols and/or code performing an implementation of the new communication protocols with the system **300.** This enables communication between the entities and the system **300,** to be described in more detail with reference to Figures 1 and 2.

When the entities have the functionalities of acting as rule-sources, they will typically register rules and/or data, such as rules and data relating to:- the formatting and/or filtering of context data; the processing of context data to produce context information; and requests for context information. This enables the system **300** to process context data and to distribute context information dynamically, to be described in more detail with reference to Figures 1, 2 and 3.

Referring to Figure 1, context data is collected from sources **302** by the sensors **304.** The communication between the system **300** and a sensor **304** is performed via methods depending on the implementation platform of the sensor **304.** The method of communication by the system **300** with sensors **304** and applications will be discussed in more detail in Figure 2.

The system **300** can be implemented on a computing device, which typically includes one or more processors, computer-readable media, for example, hard disk and/or floppy disk drives other storage media and memory, and software executable on the one or more processors that cause the processors to implement a programmed function. In some embodiments, the system **300** for processing context data may be implemented on one or more computing devices which may be, but are not limited to, one or more mobile computing devices such as laptop computers or handheld computing devices such as mobile telephones, palm held personal computers (palm PCs), personal digital assistants or wearable computers and the like. In other embodiments, the system **300** may be implemented on personal computers, backend workstations or servers supporting an organisation. In addition, the system **300** can be, but is not limited to, implementation on the same computing device as the sources **302,** sensors **304** and applications, and as will be shown, the system **300** will communicate or operate with sources **302,** sensors **304** and applications remotely located to the computing device that includes the system **300.**

The primary sources **302** that are used in the system **300** are location providers such as GPS receivers or mobile location beacons and the like. Other sources **302** may, to name a few, provide time, identity information/data, system events, and the input/output of touch-screen graphical user interfaces (GUIs). The sources **302** provide context data to the sensors **304.** That is, for each source **302,** a sensor 304 is implemented to retrieve the required context data from at least one source **302.** That is, the sensors **304** can translate the context data provided by the sources **302** into a suitable format to provide the context data to the system **300.**

Alternatively, sensors **304** may be incorporated as a component/or a portion of the sources **302,** allowing the source **302** to interface with the system **300.** The collection of context data is performed by sensors **304,** which send the context data to the communication manager **308.** The collected context data is received by the communication manager **308,** which is then passed onto the event filter **310.**

The sensors **304** can be implemented as driver programs for the sources **302** or other customised wrapper programs, for example a sensor program implemented using CORBA (Common Object Request Broker Architecture) may be used as a wrapper program to interface with a source **302.** In other realisations, a sensor **304** could be implemented as a wrapper program around a source **302** using CORBA. In these cases, the passing of collected context data from the CORBA-based sensor **304** to the system **300** can be performed via the IIOP (Internet Inter-ORB Protocol).

In a specific realisation, a sensor **304** is implemented as a software agent (sensor agent) that monitors a source **302.** The necessary context data is retrieved and sent/communicated to the system **300** via an ACL (Agent Communication Language, a standard message format defined by FIPA (Foundation for Intelligent Physical Agents), an international standard organization for multi-agent systems). The collaboration with multiple sensor agents or objects across multiple computing devices enables the collection context data from the sources **302.**

As another example of a sensor **304,** the source **302** may be an operating system (OS) of a computing device on which the system **300** has been installed. A sensor **304** can be implemented as a sensor agent, which may collect context data or interesting events (like system events) from the OS. These system events can be, for example, the use of specific application systems, the state of the battery of the computing device, the state or type of current network connection, the list of currently active application systems on the computing device and so on.

Some of the events that occur are the arrival of context data where the system **300** receives context data from the sensors **304.** The received context data is in a particular format according to the particular sensor **304** used. Thus, the event filter **310** filters these events, received context data, into fact data that is stored in the context repository **312.** The fact data is based on the retrieved context data, where the event filter **310** needs to validate and filter the context data into a specific format that depends on the implementation of the rule engine **314.**

The context repository **312** may be a database, data files, a filing system, or computer-readable media, for example, hard disk drive other storage devices and media, memory or other software system suitable for the storage and retrieval of the fact data.

In order to filter the received context data, the event filter **310** refers to the ontology registry **318.** The ontology registry **318** is a registry of each source's **302** and/or sensor's **304** structure of context data and/or rules related to the received context data, which are referred to as context data definitions. The context data definitions enable the event filter **310** to filter the received context data into fact data. These definitions and rules for filtering the context data are implemented in the system **300** as a portion of the overall rule-set, and determine how the event filter **310** will filter the received context data to evaluate the specially formatted fact data.

However, if the context data definitions are not already defined in the registry then the system **300** cannot validate or filter the received context data. To overcome this issue, the system's **300** ontology registry **318** and requisite portion of the rule-set can be dynamically updated in real-time. In order to do this, the sources **302** and/or the sensors **304** will specify (act as a rule-source) to register their context data definitions and requisite rules with the system **300** using the ontology registry interface **320** that is connected to the ontology registry **318.**

In yet other realisations, the sensor **304** does not necessarily need to stay resident after registering the context data definition of the source **302.** This type or portion of a sensor **304** may simply register on start-up, (of the source **302),** and then uninstall itself, allowing the source **302** to communicate with the system **300.** In addition, this allows the source **302** to be implemented as a thin client on the computing device or other external device.

Furthermore, a source **302** and/or sensor **304** can dynamically be added by, instead, registering its context data definition or service with an application that provides a directory service, such as a directory facilitator or mediator. This application can then be instructed by either the source **302** and/or sensor **304** or the system **300** to register the context data definition and/or the associated rules on behalf of the source **302** or sensor **304** either via the ontology register interface **320** or through other means. Alternatively, a system administrator application may enter the required definition using the ontology registry interface **320.**

In addition, if a sensor **304** is installed, the sensor's **304** installation program may interface with the system **300** to provide the context data definition the sensor **304** uses to send context data to the communication manager **308.** The methods in which a sensor **304** and/or source **302** can register a context data definition with the system **300** are not limited to that described above.

Once validation and filtering of the received context data into fact data has been achieved, the fact data is stored in the context repository **312.** This produces a change in the context repository **312** that triggers the rule engine **314** to process the fact data. The fact data is processed by the rule engine **314,** which evaluates the rules related to producing context information from the context data. These rules are stored within a rule registry (not shown) and are also known as rule scripts or production rules which may be in the form of an *IF <condition> THEN <action>* structure.

Initially, there is a predetermined rule-set including a plurality of rules that are stored in the rule registry when the system **300** is installed. This predetermined rule-set may specify the rules relating to and satisfying, at the design/installation time of the system **300,** an organisation's specific requirements for processing context data into context information. If any of the conditions, or predetermined requirements that are represented with logically linked conditions, within the rules are satisfied, then the rule engine **314** will execute the *<action>* portions of the rules.

These *<action>* portions will at times generate mid-level and/or higher-level context information and are further stored in the context repository **312** as additional fact data. The lowest level context information is, in fact based directly on the context data. For example, the context data can be based on identity (user number 2), time (30 minutes) and location data (latitude/longitude co-ordinates), and mid-level context information can be, for example, *"user 2 has been at the latitude*/*longitude co-ordinates for 20 minutes ",* and higher-level context information can be, for example, *"user 2 is late"* or *"user 2 is in danger".* An application may make a request for any level of context information i.e. either low/mid or higher-level context information.

Recently generated mid/higher-level or stored low-level context information can influence other rules and, as a result, the rule engine **314** will need to re-process the fact data (which may now include the generated mid/higher-level context information and low-level context information such as context data) by re-evaluating the rules.

The rules of the rule-set related to the rule engine **314** are stored and registered in a rule registry (not shown). The receipt/registration of these rules is achieved via the rule registry interface **322.** However, among other rule-sources, applications may also register additional rules that are specific to the context information required by that application. The rule engine **314** executes the rules stored in the rule registry based on the collected fact data to generate the mid/higher-level context information.

Any changes made to the fact data of the context repository **312** will result in the execution (or firing) of rules that notify the change to the interest registry **316.** The interest registry **316,** then sends announcement messages, or if a context information request is satisfied, messages containing the context information to applications that have stored their request for context information with the interest registry **316.** In this embodiment, the messages are sent to applications and other systems via the communication manager **308.**

Alternatively, the rule-engine **314** may contain rules relating to notifying the applications directly when a condition is met. That is, the rule-engine **314** may even communicate the context information directly to the requesting application via the communication manager **308,** bypassing the interest registry **316.**

Achieving the notification of context information that is requested by an application requires that an application communicate with the system **300.** The application provides the capability of functioning as a rule-source and sends rules and/or related data relating to requests for context information to the system **300.** This is known as registration, or registering an applications interest or interests in context information. A subscription-based registry (not shown) is used as each request for context information is received. This registry stores information about the request for context information and its sender, i.e. the application that sent it.

In this embodiment, the subscription-based registry is located within the interest registry **316.** Applications can communicate and store requests for context information with the interest registry **316** via the interest registry interface **324.** In this embodiment, the interest registry interface **324** is connected to the communication manager **308.**

The interest registry interface **324** may be used for other forms of communication with applications instead of only receiving context information requests (interests). Such communications can be the communication sometimes required between the communication manager **308** and an application, where the application provides the capability of functioning as a protocol-source. This is described in detail with reference to Figure 2.

Figure 2 illustrates a communication manager **308** for use in the system **300** of Figure 1. The goal of the communication manager **308** is to manage all the communication with the sensors **304** (and/or sources **302)** and applications. The communication manager **308** has a message sender **400,** a message receiver **402,** a protocol registry **404,** and numerous protocol implementations **406.**

Incoming messages **408** from entities such as sensors **304,** sources **302** and/or applications are received by the corresponding protocol implementation **406.** The incoming messages **408** are passed to the message receiver **402.** Each protocol implementation provides an interface between sources **302,** sensors **304** and/or applications (which possibly have capabilities of functioning as protocol-sources and/or rule-sources) and the message receiver **402.** The protocol implementations **406** can be executable programs, like API's, based on the various communication protocols such as, for example the Linux program *inetd* that uses the TCP/IP protocol. Each protocol implementation **406** occupies a physical or logical port within the computing device that includes the system **300.** The protocol registry **404** stores the various communication protocols and/or the code that performs the implementation of the communication protocols, such as the protocol implementations **406.** The protocol registry **404** stores the identity of sources **302,** sensors **304,** and/or applications that are now known to the system **300.**

New entities such as sources **302** (context data sources), sensors **304,** and/or applications need to have the functionality of specifying the communications protocol they will use (acting as protocol-sources) in order to be added and registered to the system **300.** This is achieved by the provision of a handshaking procedure between the communication manager **308** and the new entities. The handshaking procedure provides for, among other things:- a) requests for registration from the entity to the communication manager **308** (or in principle vice-versa), b) the registration of new entities which will be communicating with known communication protocols with the communication manager **308,** or c) entities with new communication protocols which will be able to specify, by transmitting to the communication manager **308,** the required new communication protocol and register accordingly. This ensures the system **300** can communicate with new sources **302,** sensors **304,** and/or applications in the future and remain operational.

Initially, a common communication protocol is used to initiate communication between the communication manager **308** and the new entity. Typically, this communication will be via a designated communication port that is used for registering entities. The entity notifies the communication manager **308** of the new communication protocol that it will use for future communications. The communication manager **308** then searches the protocol registry **404** for a communication protocol that matches. If the communication protocol and code is known to the communication manager **308,** i.e. it is stored in the protocol registry **404** or found in another similar location within system **300,** the communication manager **308** simply registers the entity in the protocol registry **404.**

As the communication manager **308** now has the ability to communicate with the entity, it allocates a specified communications port to the entity for future communication. If necessary, this communications port may possibly be shared among other entities. This keeps the designated communication port free for new entities to register with the communication manager **308.** The communications ports can be, among other things, network ports.

On the other hand, if the communication manager **308** determines that the entities new communication protocol is not already stored within the protocol registry **404** then the communication manager **308** notifies the entity with a request for the transmission of the required new communication protocol information. The new entity will then transmit the new communication protocol information (including new code for implementing the communication protocol) to the communication manager **308.**

Once the transmitted new communication protocol information is stored in the protocol registry **404** the communication manager **308,** then registers the entity, i.e. identification information etc., with the protocol registry **404** or another similar location within system **300.** A communications port is then allocated to the protocol-source for future communication as discussed above.

In addition, the protocol registry **404** provides a secure storage facility for communication protocol information received by the communication manager **308,** for example, the protocol registry **404** may be located within a central server. This provides added security ensuring the system **300** has access to legitimate entities such as sources **302,** sensors **304,** applications. As an example, if an entity or a third party application such as a directory service, cannot fulfil the transmission of the new communication protocol information or the identity of the entity etc., then the communication manager **308** will not register that entity or store its communication protocol information.

The code that performs an implementation of the new communication protocol may be given in a platform independent format, such as byte-code format or interpreter based formats like XML. This allows the system **300** to be hardware, operating system, and programming language independent and provides the capability of future maintenance and evolution without costly redevelopment of the system **300.**

It should be noted, that after the registration of a new entity such as a new source **302** and/or a sensor **304** that provides new context data, the format of the received context data may be unknown, i.e. the context data definition may also be new to the system **300.** As a result, the event filter **310** and ontology registry **318** may require updating as was described previously with reference to Figure 1. That is, referring back to Figure 1, the new sources **302** and/or sensors **304** will need to provide the capability of functioning as a rule-source. Alternatively, a third party rule-source, such as a directory service, could act on their behalf. The new source's **302** and/or sensor's **304** context data definitions and requisite rules may be stored and registered with the system **300** using the ontology registry interface **320** that is connected to the ontology registry **318.**

Referring back to Figure 2, each protocol implementation **406** receives an incoming message **408** that follows a particular protocol. These incoming messages are converted by the protocol implementation **406** into messages that can be understood by the system **300.**

Firstly, each incoming message **408** is received via one of the protocol implementations **406.** The incoming message **408** contains at least two types of information:- the sender of the message (that is, for example, the source **302,** sensor **304,** and or application that sent the message) and the message content. As an example, if the sender of the message is a sensor **304,** and/or the message content relates to context data, then the message receiver **402** will forward the converted message to the event filter **310** for validation and filtering into fact data.

Alternatively, if the sender of the message is an application, and/or the message content relates to a request for context information, then the message receiver **402** will forward it to the interest registry **316,** where the sender of the message's request is registered in the subscription registry.

An example of an ACL message that may be received by a protocol implementation **406** from a source **302** or a sensor **304** is shown below.

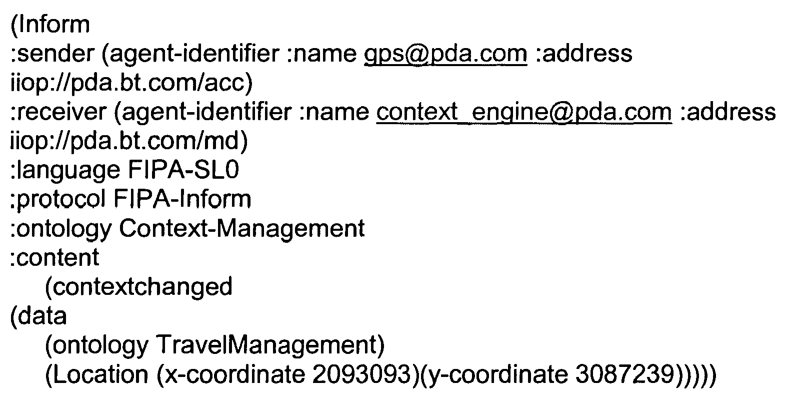

In this example, the protocol implementation **406** communicates with a FIPA agent and the message may have the form shown above. On receiving the message, the protocol implementation **406** will remove the ACL message content. As can be seen in this example, the predicate name of the content is *"ContextChanged",* and the protocol implementation **406** can identify that this content is aimed for event filter **310.**

With reference to Figure 1, the content of the ACL message is sent to the event filter **310,** where it is filtered into fact data before being inserted into the context repository **312.** The event filter **310** will need to look up the rules and context data definitions within the ontology registry **318** to validate the received data. This ensures that only legitimate data is inserted into the context repository **312.** On successful validation and filtering, the event filter **310** enters the fact-data into the context repository **312** using an API provided by the context repository **312.**

The context handling logic within the system **300** consists of two parts: the context data definition part and context handling rules or rules related to the rule-engine **314.** The context data definition part is registered in the ontology registry **320** via provided APIs or ontology interfaces **320.** The context handling rules are registered in the rule engine's **314** rule registry (not shown) via the rule registry interface **322.**

A language syntax that defines context data definitions and handling logic is dependent on the specific implementation of the rule engine **314** used. Any type of rule engine **314** may be used in system **202.** In this symbolic embodiment, the rule engine **314** that is used is the JESS (Java Expert System Shell, http://herzberg.ca.sandia.gov/jess/) engine. In this case, the portion of the rule-set related to the rule engine **314** are rules in the JESS format (written as rule scripts) which are provided by either rule-sources, such as applications versed in the JESS syntax, or the predetermined rules entered by the system developer during design time.

An example of a context data definition that can form an entry in the ontology registry **318** is shown below.

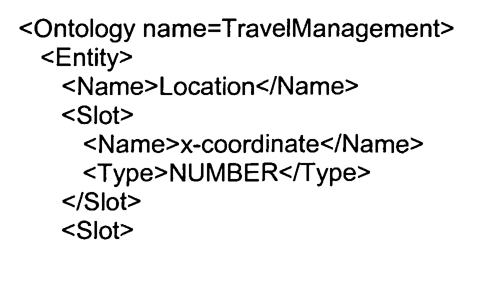

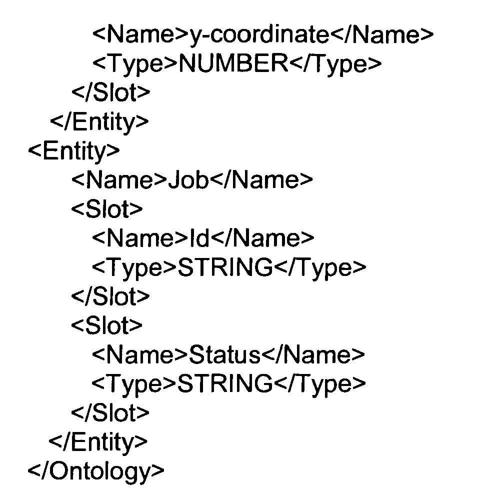

Another example of the above context data definition is shown below in JESS syntax. The name of the entry in the ontology registry 318 can be the name of the JESS file to allow easy loading of the context data definition by the event filter 310.

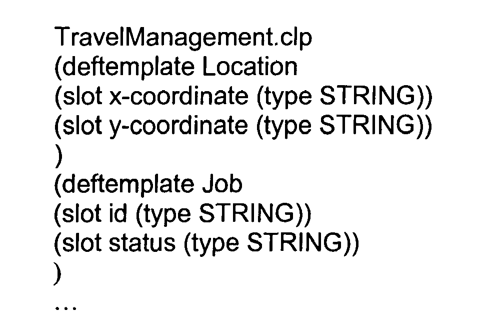

The context handling rules, i.e. the portion of the rule-set related to the rule engine 314, takes the form of *IF-THEN* production rules. Such production rules consist of two parts: 1) the condition part and 2) the action part. The condition part is used to define a condition that specifies the designated state of some fact data (derived from received context data). If the condition is satisfied, then the action part is executed.

An exemplary production rule for the JESS rule engine **314** is illustrated in the production rule fragment below.

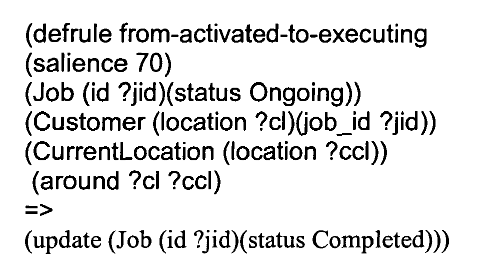

Typically, the action part would comprise functions that modify the progress of a job status or mid-level context information or fact data. In general, a large number of rules will be defined to specify the fact data processing logic for each organisation and/or application. There are two types of generic production rules, 1) a mid-level context rule and 2) a higher-level context rule. A mid-level context rule produces (or updates) mid-level context information based on the change of fact data (i.e. the change in context data collected from the sources/sensors **302/304).** Higher-level context rules will produce (or update) higher-level context information based upon mid-level context information and/or fact data.

The context data is the data that is collected by a sensor **304** or sent by a source **302** (if no sensor **304** is available, or the sensor **304** and source **302** are combined) while context information is generated by processing the fact data (which is based on context data) and/or context information (stored as fact data).

As an example, the location and time data obtained from a GPS system is context data, while *"the user stayed at the same location for 30 minutes"* is mid-level context information, whereby higher-level context information derived from the mid-level context information may be *"the user will be late*" or *"the user is in danger",* or some other statement.

Figure 3 illustrates an interest registry **316** for use in the system **300** of Figure 1. The interest registry **316** is the mechanism with which rule-sources, for example applications with the capabilities of functioning as rule-sources, can register their predetermine requirements, rules and/or related data relating to context information and requests for context information, an interest registration entry. The rule-sources that register are called registrants and all registrants of the interest registry **316** will receive notification messages if context information is available that satisfies the conditions imposed by their predetermined requirements, rules and/or related data.

As shown in Figure 3, the interest registry **316** has a registry reception **500** that communicates with the communication manager **308.** The registry reception **500** either receives an interest registration entry (e.g. predetermined requirements, rules and/or related data relating to requests for context information) from a rule-source or sends a notification message (e.g. message containing context information) to the corresponding rule-source, for example an application.

On receiving a rule or related data relating to a request for context information, the registry reception **500** will retrieve the content of the request for context information and insert it into permanent storage in a registry database (DB) **502.** Registry reception **500** then invokes a rule-translator **504** that produces an invocation rule, represented by line **506.** This invocation rule can be input into the rule registry of the rule engine **314.** The invocation rule will then trigger the rule engine **314** into notifying the interest registry **316** to send notification message back to the registrant when its predetermined requirement or rule is met. Alternatively, the invocation rule can trigger the rule engine **314** into notifying rule-source by sending a notification message back to the registrant when its predetermined requirement or rule is satisfied.

A request for context information sent by a rule-source, e.g. an application with context aware features, to the interest registry, (i.e. an interest registration entry or rule and/or related data relating to a context information request) is shown below.

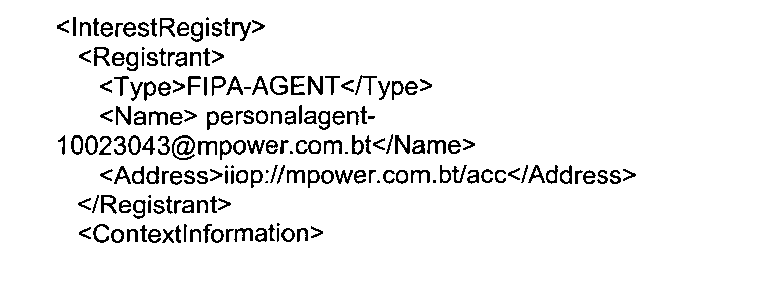

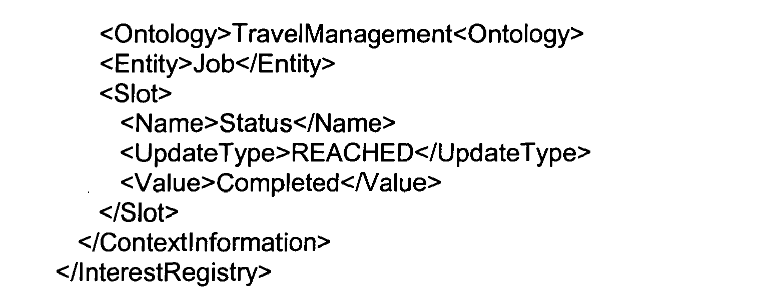

This request consists of two main parts: the recipient part and the context information part. The recipient part contains information regarding the registrant, (i.e. the application), and the protocol implementation it wants to use to communicate with, which may be an agent or any other component such as CORBA, Component Object Model, or Enterprise Java Beans, for example. The context information part defines the context information that interests the registrant.

In the above request for context information, the registrant is an application that uses a FIPA compliant software agent that is running in the address of *iiop:*//*mpower.com.bt*/*acc*. The agent, *personalagent-10023043@mpower.com.bt*, is interested in the status slot value of all Job objects defined in the *TravelManagement* ontology, given by the previous ontology registry entry. In particular, the agent wishes to be notified when the status slot has *"Completed"* as its value.

An example of an invocation rule is shown below which is a portion of the rule-set related to notifying the rule-source of requested context-information.

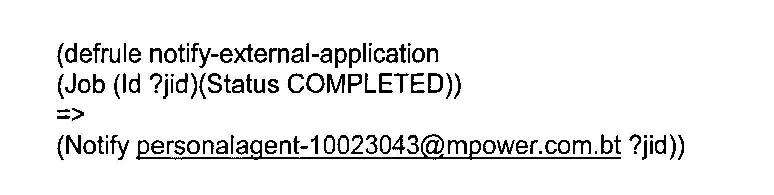

In this invocation rule definition, *'Notify'* is a system function that will call an API provided by registry reception **500** to send a notification message to the recipient/registrant by providing the specified arguments: recipient and context information.

Referring back to Figure 2, the communication with rule-sources, e.g. applications, is performed via the communication manager **308.** This works by having the rule-source send a rule and/or related data or an interest registry subscription message relating to a request for context information. This message is received by message receiver **402** and then passed to the interest registry **314.** When the context information request is fulfilled, a notification message containing the recipient and the context information is passed to message sender **400** and is sent out to the designated rule-source, e.g. application that had registered its request to the context information.

Before sending, the message sender **400** first checks the required protocol to send/communicate the message to the recipient by querying the protocol registry **404.** The protocol registry **404** returns an object reference of the installed protocol implementation **406** if the protocol implementation **406** has been registered. The message sender **400** will then use the object reference to invoke the required protocol implementation **406.** The method of invocation is done via a predefined interface definition that defines all the methods that should be implemented by any protocol implementation **406.**

An example of an interface that would be implemented by the corresponding protocol implementation **406** is shown in the following code fragment.

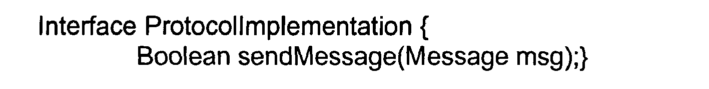

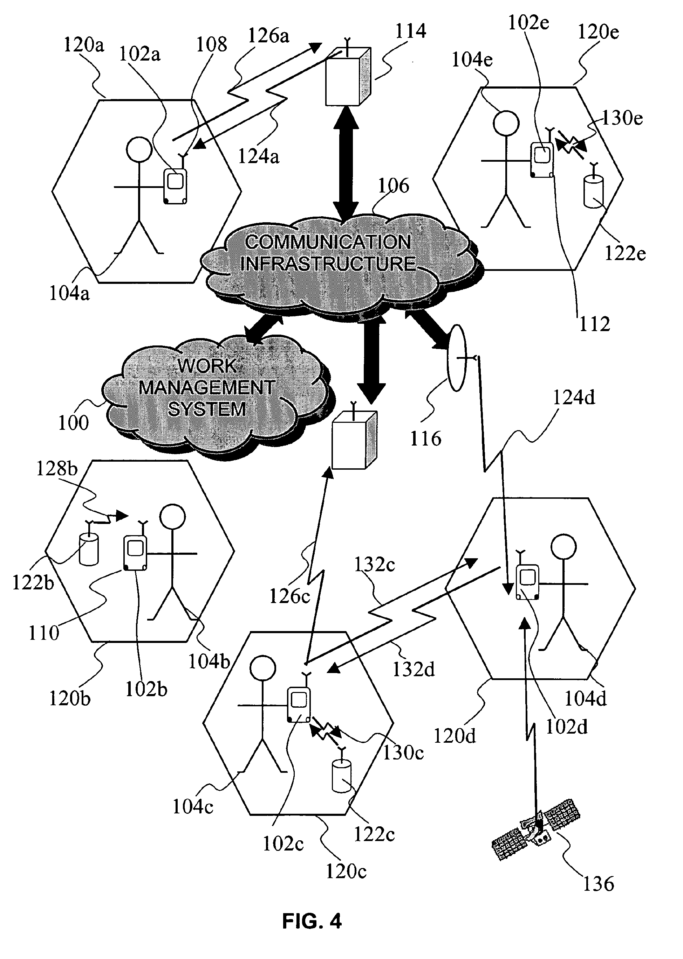

Referring to Figure 4, an illustration of a preferred embodiment of a network for processing context data is shown. This is used in conjunction with an organisation's work management system **100.** The system **300** for processing context data (called system, and not shown in this Figure) is provided as a program on each portable device (PD) **102a** to **102e,** (for more details refer back to Figure 1).

The PDs **102a** to **102e** are carried by the organisation's workforce **104a** to **104e** and will have access to a common communication infrastructure **106** via various interfaces/communication elements like mobile terminal antennae **108,** infrared antennae/connections **110,** or a wireless LAN interfaces **112,** to name a few. Networked to the common communication infrastructure **106** are various communication elements like mobile base-stations **114,** or wireless LAN transceivers **116.** These are only examples of what interfaces/elements could be used to provide access to the common communication infrastructure **106,** as well, wired interfaces/elements may also used.

The work management system **100** is located onsite within the organisation, for example, within an organisation's offices or management centres. The work management system **100** also has access to the common communication infrastructure **106.** The worker's locations **120a** to **120e** are either offsite or onsite. As an example, the workers **104a** to **104e** can work offsite, such as service engineers working in the field, or alternatively, the worker's locations **120a** to **120e** can also be onsite in and around the organisation's offices.

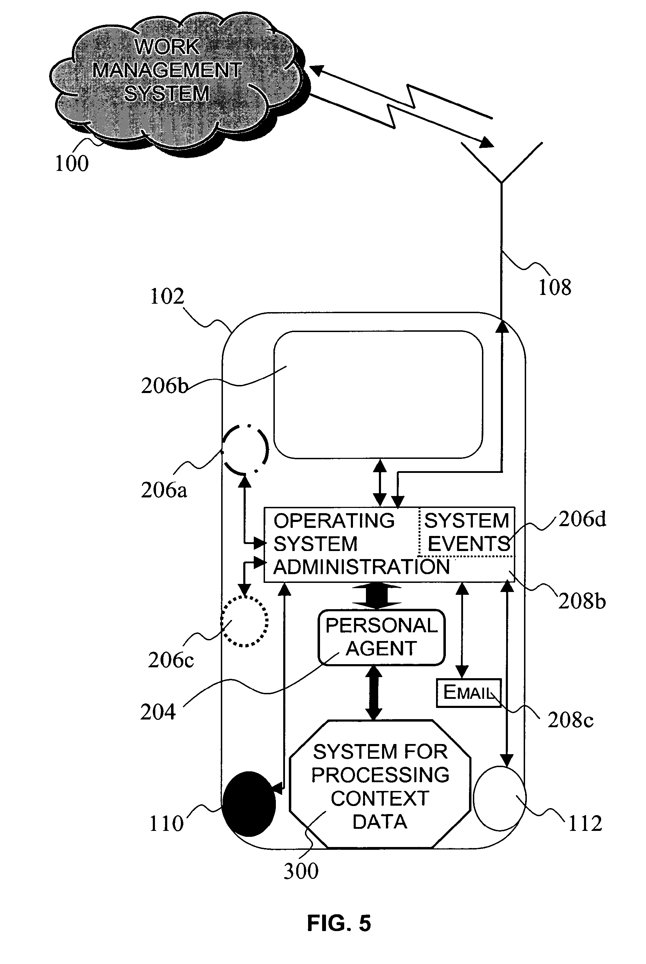

Context data is collected by sensors **122b**, **122c**, **122d,** or **122e** from various external sources (not shown) that are located in and around the worker's location. As has been discussed with reference to Figures 1, 2 and 3, the sensors **122b**, **122c**, **122d**, or **122e** can have the capability of functioning as protocol-sources. In addition to providing context data, these protocol-sources also provide the system for processing context data with the required communication protocols and code for performing an implementation of the communication protocol, and other related information, enabling the system for processing context data to communicate with the respective sensor **122b, 122c, 122d,** or **122e.** Other sensors or sources can be located internally on the PDs **102a** to **102e,** of which some examples are shown in Figure 5.

The work management system **100** communicates with the worker **104a** in location **120a** via the PD **102a.** The work management system **100** can be an application that has the capabilities and functions of a rule-source. Alternatively, the work management system **100** can be set-up to communicate automatically or directly with the PD **102a** itself without the worker's **104a** assistance.

In this case, the PD **102a** is in communication with the work management system **100** via base-station **114** of the common communication infrastructure **106.** The system for processing context data on PD **102a** will receive a rule and/or related data relating to a request for context information, conveyed by signal **124a,** from the work management system **100.** This will update the rule-set contained within the system for processing context data on PD **102a.** The context information requested may be the location of the worker **104a,** the number of jobs/tasks completed, or some other organisation specific information, for example, information required for organising/optimising the worker's job schedule.

The rule and/or related data relating to the request for context information is conveyed by signal **124a** and processed by the system for processing context information on PD **102a.** If the system on PD **102a** has received and processed the relevant context data received from any available sensor (not shown) then the system will notify and send the context information, in a required format, to the work management system **100,** as conveyed by signal **126a.** The work management system **100** receives and processes this information and takes action depending on the organisation's requirements. For example, it may send the worker **104a** to a different location to perform another job.

The worker **104b** in location **120b** shows an example where a sensor **122b** communicates context data, conveyed by signal **128b,** to the PD **102b.** The sensor **122b** sends any collected context data in a specific format to the PD **102b.** In this case, the system on PD **102b** either already knew the specific format the context data was being sent in and the communication protocol that the sensor **122b** uses for communication, or this information (the sensor's **122b** context data formats and protocol information) has previously been communicated to the system via the initial handshake procedure as described in Figure 2.

The PD **102c** of the worker **104c** at location **120c** is currently sending context information, conveyed by signal **126c**, to the work management system **100** via the common communication infrastructure **106.** In addition, PD **102c** is in communication with sensor **122c,** i.e. the sensor **122c** has the capabilities of also functioning as a protocol-source. In this case, the system within PD **102c** is performing a handshake operation represented by signals **130c** with sensor **122c** which communicates/or registers with the system additional instructions and/or rules and related data relating to the specific format of the context data that sensor **122c** collects, as described previously with reference to Figures 1 to 3. After the handshake operation, sensor **122c** will then be able to send context data collected from its sources (not shown) to the system in PD **102c** for processing.

In a similar manner as described above, the system of PD **102d** of worker **104d** in location **120d** receives a rule and/or related data relating to a request for context information, conveyed by signal **124d,** from the work management system **100** via the common communications infrastructure **106.** As well, the system of PD **102d** receives signals from a GPS satellite system **130** for the calculation of location context data within a GPS receiver located on PD **102d** for collection by an onboard sensor (not shown). This sensor is located within PD **102d,** and can send location information to the system on PD **102d.**

In addition, there is peer-to-peer communication between PDs **102c** and **102d,** conveyed by signals **132c** and **132d,** where the PDs **102c** and **102d** are requesting and/or receiving context-data and/or context information from each other. In this case, PD **102c** makes a request for context information, conveyed by signal **132c,** from PD **102d,** whereby PD **102d** having already processed the request, via its own system for processing context data, provides the context information, conveyed by signal **132d.** The PDs **102a** to **102e** themselves may act as rule-sources or protocol-sources, i.e. applications, sources, or sensors with respect to each other and/or the work management system **100.**

At location **120e,** the system on PD **102e** is performing a similar handshaking operation with the sensor **122e** that collects context data from its respective source as has similarly been described that of PD **102c** above.

Examples of PDs **102a** to **102e** that may be used are any portable device such as a mobile phone, personal digital assistant (PDA), or laptop computer. In addition, should a PD not be capable of running or storing a system for processing context data, then the system may instead be installed on another device, i.e. located externally to the PD, yet still having the capability of interacting (i.e. receiving context data and requests for context information and sending context-information) to rule-sources via the PD or otherwise.

Figure 5 illustrates a preferred embodiment of a portable device (PD) **102** for use in the network for processing context data of Figure 4. A Personal Agent software program **204** controls the interaction between the system **300** for processing context data and the different sources **206a** to **206d** and rule-sources **100, 208b** and **208c,** e.g. the applications, shown in this Figure. The sensors (not shown) that collect context data from the sources **206a** to **206d** are implemented as software programs that are installed on the PD **102.** Furthermore, PD **102** contains communication hardware such as a mobile terminal antenna **108,** an infrared communication device **110,** and a wireless LAN communication device **112** for communication with external entities, protocol-sources and rule-sources, such as external sources, sensors and applications like the work management system **100.** The communication hardware is not limited to only wireless communication hardware, i.e. wired communication hardware can also be used to connect/access the communications infrastructure (not shown).

The sources **206a** to **206d** that are shown in Figure 5 are located internally/or on the PD **102.** These sources **206a** to **206d** could be a GPS satellite receiver **206b** for providing location data, or other context data sources such as a touch screen graphical user interface **206b,** a track pad **206c**, and other programs/devices that generate system events **206d,** to name a few. These sources **206a** to **206d,** communicate with their respective sensors, which are registered with the system **300.**

The sensors will typically interact with the operating system administration software **208c,** which in turn directs these interactions to the Personal Agent **204.** The Personal Agent **204** can in fact act like a aggregate protocol-source or rule-source with system **300.** That is, when required the Personal Agent **204** directs the appropriate entities, protocol-source and/or rule-source interactions, i.e. a sensor's or application's **100, 208b** and **208c** interactions (namely the collected context data, context data definitions, communication protocol information, rules and/or related data relating to requests for context information), to system **300** for processing context data into context information.

The rule-sources (applications) **100, 208b** and **208c** that are shown in Figure 5 are a work management system **100,** an email program **208b,** and the operating system administration **208c**. Note, in addition to being an application (rule-source), the operating system administration **208c** may also have sources installed or embedded, in this example there are sources called system events **206d.** The rule-sources (applications) **100, 208b** and **208c** send rules and/or related data relating to requests for context information to the system **300** via the Personal Agent **204.** When the context information has been evaluated by the system **300,** the system **300** sends the context information, in an appropriate format, to the respective rule-source (application) **100, 208b** and **208c** that requested the context information.

Other configurations of the Personal Agent **204** and system **300** are possible. As an example, the system **300** may be embedded within the Personal Agent **204,** whereby the Personal Agent **204** may provide several functionalities that are provided by sources, sensors and/or applications (i.e. protocol-sources and rule-sources). The Personal Agent **204** could also receive context data from sources and/or sensors external to the Personal Agent **204** for, among other things, re-direction to the system **300.** Similarly, the Personal Agent **204** may receive requests for context information from rule-sources, e.g. applications, external to it for, among other things, re-direction to the system **300** and as a result send the requested context information when available to the external rule-sources, e.g. applications requesting context information.

Furthermore, if a portable device (PD) **102** does not have enough processing power or memory storage for the Personal Agent **204** and/or a system **300,** then the Personal Agent **204** and/or a system **300** may be implemented on a computing device external to PD **102.** In this case, PD **102** may interface/communicate with the external computing device to have access to the Personal Agent **204** and/or a system **300.**

In other embodiments, with reference to Figure 2, the functionalities of new entities such as sources **302,** sensors **304** and/or applications, (protocol-source components) do not necessarily need to stay resident after the handshake procedure, when the new communication protocol has been registered and stored in the protocol registry **404.** This type of functionality of the entity may simply perform the handshake procedure on start-up, (i.e. start-up of a source **302,** sensor **304** or application), and then the functionality uninstalls itself, allowing, for example, a source **302** to communicate with the system **300.** In addition, this allows, for example, the source **302** to be implemented as a thin client on the computing device or other external device allowing the sharing of computing resources.

Furthermore, as briefly described above, a new entity (source **302,** sensor **304,** or application) can dynamically be added by, instead, storing its communication protocol and the code for implementing it, with an application providing, for example, a directory service such as a directory facilitator or mediator. This application can then be instructed by the respective source **302** and/or sensor **304** or the system **300** to transmit the new communication protocol and/or code for implementing it, on behalf of the source **302** or sensor **304** or application for storage in the protocol registry **404** and registration with the system **300.** Alternatively, a system administrator application may enter the required communication protocol and code that performs the implementation of the communication protocol via a similar mechanism.

In addition, if a new sensor **304,** for example, is installed, the sensor's **304** installation program may interface with the system **300** to provide the new communication protocol that the sensor **304** uses to send context data to the communication manager **308.** The methods in which a new sensor **304** and/or source **302** can store/register its identity and new communication protocol with the system **300** are not limited to that described above.

It will be understood that the present invention extends to methods and/or apparatus substantially as herein described with reference to the accompanying drawings. Any feature in one aspect of the invention may be applied to other aspects of the invention, in any appropriate combination. In particular, method aspects may be applied to apparatus aspects, and vice versa.

In addition, the present invention has been described above purely by way of example, and modifications of detail can be made within the scope of the invention.

Each feature disclosed in the description, and (where appropriate) the claims and drawings may be provided independently or in any appropriate combination.

## Claims

1. A system for processing context data comprising means for receiving context data (304,308,402,404,406) from a plurality of sources (302); means for producing context information (310,312,314,316) from the received context data according to a predetermined rule-set including a plurality of rules; and means for communicating the context information (308,316,400,404,406) to at least one application,
**characterised in that**
the system (300) includes means for permitting at least one protocol-source (302,304,404) to specify a new communication protocol for future communication between the protocol-source and the system, thereby updating the means for receiving (304,308,402,404,406) and/or communicating (308,316,400,404,406).

2. The system according to claim 1 wherein the protocol-source is at least one context data source (302).

3. The system according to claim 1 or claim 2 wherein the protocol-source is at least one of the applications.

4. The system according to any preceding claim wherein the protocol-source is at least one directory service.

5. The system according to any preceding claim which includes a protocol registry (404) for storing the new communication protocol.

6. The system according to claim 5 wherein the protocol-source transmits code to perform an implementation of the communication protocol (406) to the protocol registry (404).

7. A system for processing context data comprising means for receiving context data (310,312,314,316) from a plurality of sources; means for producing context information (310,312,314,316) from the received context data according to a predetermined rule-set including a plurality of rules; and means for communicating the context information (308,316,400,404,406) to at least one application,
**characterised in that**
the system (300) includes means for permitting at least one rule-source (320,324,322) to specify at least one rule thereby updating the rule-set, wherein the rule-source specifies rules for filtering and/or formatting the context data.

8. The system according to claim 7 wherein the rules determined by the rule-source further include rules for producing context information from context data.

9. The system according to claim 7 or claim 8 wherein the rule-source is at least one context data source (302).

10. The system according to any of claims 7 to 9 wherein the rule-source is at least one of the applications.

11. The system according to any of claims 7 to 10 wherein the rule-set can be updated dynamically.

12. The system according to any of claims 7 to 11 further comprising at least one registry (318,316) for storing rules specified by the rule-source.

13. The system according to claim 12 which includes a first registry (318) for storing rules for filtering and/or formatting context data and a second registry for storing rules for producing context information.

14. The system according to any of claims 7 to 13 which includes means for notifying (308,314,316) the application when a predetermined requirement is met.

15. The system according to claim 14 wherein the predetermined requirement is at least partly determined by the rules specified by the rule-source.

16. The system according to claim 14 or claim 15 which includes an interest registry (316) for storing the rules which determine the predetermined requirements of the application.

17. The system according to any preceding claim which includes means for collecting context data (304).

18. The system according to claim 17 which includes means for translating the context data (304) provided by the sources (302) and providing the context data to the system (300).

19. The system according to claim 17 or claim 18 wherein the collecting means is a sensor (304).

20. An apparatus which includes the system (300) for processing context data according to any preceding claim.

21. The apparatus according to claim 20 which includes a wireless interface (108,110,112).

22. A network for processing context data which includes a system (300) for processing context data according to any of claims 1 to 19, a plurality of data sources (302) for supplying context data to the system (300) for processing context data and a plurality of applications for receiving context information from the system (300) for processing context data.

23. The network according to claim 22 wherein at least one of the systems (300) for processing context data is implemented on the apparatus (102) according to claim 20 or claim 21.

24. The network according to claim 22 or claim 23 wherein at least one of the applications is implemented on the apparatus (102) according to claim 20 or claim 21.

25. The network according to any of claims 22 to 24 wherein at least one of the data sources (302) is on the apparatus (102) according to claim 20 or claim 21.
